# EUROPEAN PATENT APPLICATION

(11) **EP 2 145 550 A1**
(43) Date of publication of application: **20.01.2010**
(21) Application number: 08160400.1
(22) Date of filing: 15.07.2008
(51) Int. Cl.: A23P 1/02, B01J 2/08, A23L 1/328

(54) **Device for the production of granular caviar substitute**

(71) Applicant: Khachatryan, Robert, 1976 DC Ijmuiden (NL); Khachatryan, Tigran, 1976 DC Ijmuiden (NL)
(72) Inventor: Khachatryan, Robert, 1976 DC Ijmuiden (NL); Khachatryan, Tigran, 1976 DC Ijmuiden (NL)
(74) Representative: van Heuvel, Margaretha

(57) **Abstract**

The invention concerns a device having a vessel having a heater. The first pump and the first heat-exchange device are sequentially connected to the vessel by pipeline and valve-plugs. The initial mixture distribution device is also connected to the vessel by pipeline and valve-plugs. The droppers are connected to the ends of outgoing pipes of the initial mixture distribution device, under which a receiving semi-tubular device is installed that is connected through a pipeline and a second heat-exchange device to a second pump and a ready granules collector that has replaceable mesh bags. Production of granular caviar substitute of standard rate is provided.

## Description

The invention concerns food production, particularly a device for production of granular foodstuff that can be used for production of granular caviar substitute.

A device for production of a granular caviar substitute is known that includes a heat-resistant hermetic vessel for the initial mixture, a granules formation knot and reception device that has a cooling jacket, a receiving funnel on the top secured by the heating element, an extrusion knot of initial mixture from the vessel that is connected to a jagged pump or pressure tank by a pipeline, a sprinkle device for creation and formation of batch drops to non-flowing liquid for the initial mixture, a granules collector, a vessel for separation of granules from vegetable oil and a semitubular device for the granules transfer (USSR authorization certificate No. 276725, MAD A23L 1/328, 1970).

The defect of this device is its low efficiency, connected with generalization of the process and instable regime of granules formation that causes the granules to be formed at different sizes, i.e. large amounts of waste. Inconsistency of the formed granules to standard is conditioned by the fact that the upper layer having passed through the vegetable oil the stream of the initial mixture is crushed and continuously stays in chaotic movement at 45-50°C causing non-recoverable changes.

A device for production of granular black caviar substitute from the foodstuffs is known as well, that includes an open vessel with outgoing pipes for the initial mixture, a vessel for the vegetable oil for formed liquid that has a heating element on the top, a vessel for separation and cooling for the granules from the liquid, a separation sieve through water drain vessel and pipelines for cooling water provision and forming liquid overflow. The vessel for the forming liquid is directly installed on the vessel for release from forming liquid and cooling and communicates with it, the pipeline for cooling water provision is connected with the bottom of the vessel for separation of the granules from liquid and cooling, and the pipeline for the forming liquid overflow is connected with the middle section of the latter - at the limit forming liquid - water. The two vessels are provided with electric drive activators in the form of beaters that are fastened in the middle section of the filling vessels by rotation possibility and a water drain tap for the granules emptying. The vessel for the initial mixture is a funnel and the vessel for forming liquid has a lid that has holes in different instances from the center. The outgoing pipes of the vessels for the initial mixture are of 3-5 mm. diameter and their outgoing ends are connected to the holes of the lids (License of RF No. 2029497, MAD A23L 1/328, 1995).

The defect of this device is an unstable regime of the granules formation that is conditioned by permanent changes (decrease) of pressure in outgoing pipes due to decrease of the initial mixture level in the vessel, on the other hand by the trajectories and characteristics of the granules movement (different conditions of formation) that causes formation of granules at different sizes, i.e. large amounts of waste as a result that the top heated layer of the formed liquid (vegetable oil) is intensively mixed with the cooler bottom layers if continuously mixed by mechanical mixer and has no internal limit (hot-cold), and the course of mixture of the forming liquid has a vortex (unstable) character. Furthermore, as the course of preparation of caviar is at +15°C - +40°C and at the terms of permanent contact with air consisting of microbes within several hours, so the soiling of the product by pathogenic or conditionally pathogenic microflora is possible due to which the shelf life of the product decreases.

The closest analog of invention is a device for production of the alimentary black caviar product that includes a vessel of the initial components mixture that has outgoing pipes with jet-mixing tops, a gas pressure source that is connected to the vessel of initial components mixture, a cylindrical vessel-granulator for granules formation that is forming the pipe determining for overflow of the excess of the forming liquid that is installed coaxial to the vessel of the initial components mixture before the outgoing pipes. Moreover, water-jackets are installed around the cylindrical vessel-granulator for their heat stability, and the storage is installed for collection of the placed ready granules on the bottom of the vessel-granulator (USSR authorization certificate No. 1782523, MAD A23L 1/328, 1992).

The defect of this device is also that a large amount of granules deviating from standard sizes is obtained that causes further fitting of the caviar granules and decrease of the finished product. Difference of the forming granules sizes is conditioned by the fact that the stream of initial mixture at entering into the oil are cut into granules that stay in chaotic movement during a long time, hit against each other, stick together at the conditions of temperature (86-90°C) that promote the non-regulating change of the granules form and sizes. Besides, as unsterile air is served to the vessel of the initial mixture that may have microbes, so the soiling of the product by pathogenic or conditionally pathogenic microflora is possible due to which the shelf life of the product decreases.

The object of the invention is to avail of a device for the production of a granular caviar substitute that enables production of granules of standard size and without waste and decreases the possibility of soiling of the product by pathogenic or conditionally pathogenic microflora during the course of production.

So the present invention provides a device for the production of a granular caviar substitute. The device includes a vessel of the initial components mixture provided with outgoing pipes with jet-mixing tops, a gas pressure source that is connected to the vessel of initial components mixture, a cylindrical vessel-granulator, water-jackets, and a collector of the ready granules, the vessel of the initial components mixture having a heater. A first pump and a first heat-exchange device are sequentially connected to the vessel by pipeline and valve-plugs, having outgoing pipes and the initial mixture distribution device from the both ends, the outgoing pipes. Droppers are connected to the ends of outgoing pipes of the initial mixture distribution device, under which a receiving semi-conductor is installed that is connected through a pipeline and a second heat-exchange device to a second pump and a ready granules collector.

The outgoing pipes of the initial mixture distribution device have valve-plugs for achieving the purpose of the invention.

The centrifugal pumps are used as first and second pipes for achieving the purpose of the invention as well.

The mesh bags are replaceable for achieving the purpose of the invention as well.

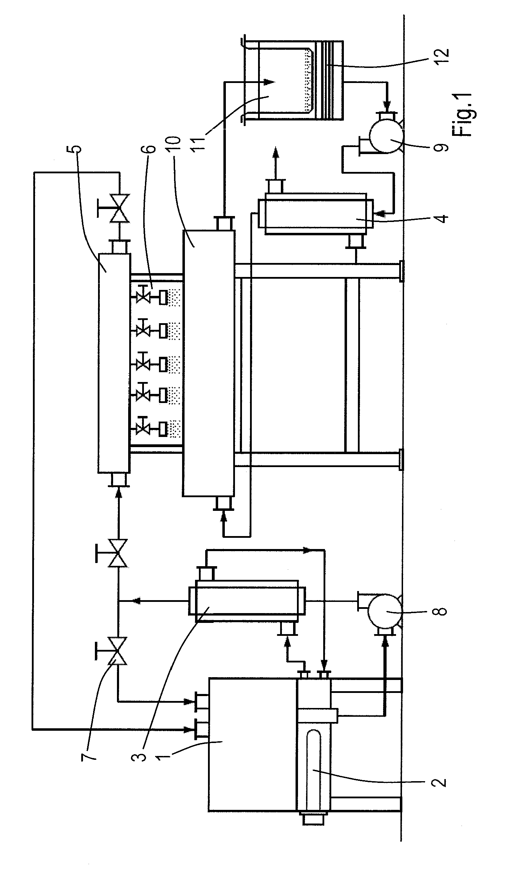

The invention is explained through the drawing (Figure 1) where the following components are used:
1. initial mixture vessel;
2. electric heating device;
3. first heat-exchange device;
4. second heat-exchange device;
5. initial mixture distribution device;
6. droppers;
7. valve-plugs;
8. first centrifugal pump;
9. second centrifugal pump;
10. receiver semitubular device;
11. ready granules collector;
12. mesh bags.

The device is suitable for the formation of spherical granules and implementation of the main actions for preparation of the granular caviar substitute, particularly for formation of spherical granules with a diameter of 2-3,5 mm from a protein mixture. Further actions for caviar production, i.e. tanning, painting, taste filling, may be carried out in common plates or in special vessels in known ways.

The device works as follows.

An initial mixture is prepared that is a mixture of a protein colloid solution, e.g. milk, and jelly. For that purpose the alimentary jelly is added to boiled and cooled water, mixed with it and left for 90 minutes, then boiled and cooled milk till 50°C is added. The temperature of the mixture must be up to 50-55°C and serve the vessel for initial components mixture (1). In this vessel (1) the temperature is kept at 50°C by a heating device (2), from where the initial mixture is directed to a distribution device (5) through a first heat-exchange device (3) by a first centrifugal pump (8), to add the heat losses.

A stable pressure is provided in the first mixture distribution device (5) due to the fact that both ends are connected to the vessel of initial components mixture (1) through a pipeline and valve-plugs (7). The initial mixture drops from the mixture distribution device (5) into a receiver semitubular device (10) through droppers (6), connected to the initial mixture distribution device (5). The droppers (6) are taps, having needle dropping tops having a diameter of 0,4-0,6 mm. The droppers (6) have valve-plugs through which the diameters and speed of formation are controlled. Having dropped in the hot oil, the drops of the initial mixture in the receiver semitubular device (10) are formed and the granules are obtained. They are distributed through the oil flow and appear in a ready granules collector (11).

The ready granules collector (11) has a mesh bag (12) from which the vegetable oil is always separated, cooled in a second heat-exchange device (4) to less than 15°C, directed to the receiver semitubular device (10), returned to the collector (11) through a second centrifugal pump (9). So, an oil circulation is carried out due to which its efficiency is provided.

After filling a mesh bag (12) with ready granules, it is taken out from the collector without interfering with the operation of the device, since the granules continue to be collected in the next mesh bag. More than 10 mesh bags may be placed in the granules collector (11), the capacity, as well as the length of initial mixture distribution device (5), width and length of receiver semitubular device (10) are conditioned by the required efficiency.

The device may be replaced in a hermetic cover to decrease the possibility of soiling of the product by pathogenic or conditionally pathogenic microflora during the course of production.

The invention may be used in the small-scale enterprises of food industry during the receiving of small volumes of caviar as well as in large-scale enterprises at large production of caviar.

## Claims

1. A device for the production of a granular gaviar substitute comprising a vessel for initial mixture (1), a heating device (2) and an initial mixture distribution device (5) with outgoing pipes, **characterized in that** pipelines and valve-plugs (7) of the initial mixture vessel (1) are sequentially connected to a first pump (8), first heat-exchange device (3) from both ends, the initial mixture distribution device (5) having outgoing pipes, droppers (6) connected to the ends of outgoing pipes under which a vessel-granulator in the form of semitubular device (10) is placed that is connected to a second pump (9) and a ready granules collector (11) through a pipeline and a second heat-exchange device (4).

2. The device of claim 1, wherein the first and second pumps are centrifugal.

3. The device of claim 1, wherein the ready granules collector has mesh bags (12).

4. The device of claim 3, wherein the mesh bags are replaceable.
